# EUROPEAN PATENT SPECIFICATION

(11) **EP 0 931 701 B1**
(45) Date of publication and mention of the grant of the patent: **10.12.2003**
(21) Application number: 98204417.4
(22) Date of filing: 22.12.1998
(51) Int. Cl.: B60R 16/02, B60K 28/14

(54) **Battery disconnection system**
Trennungssystem für eine Batterie
Système de déconnexion d'une batterie

(30) Priority: 13.01.1998 GB 9800589; 10.06.1998 GB 9812423
(43) Date of publication of application: 28.07.1999
(73) Proprietor: Delphi Automotive Systems Deutschland GmbH, D-42369 Wuppertal (DE)
(72) Inventor: Alksnat, Holger, 58285 Gevelsberg (DE); Kriegesmann, Stefan, 44269 Dortmund (DE)
(74) Representative: Denton, Michael John

(56) References cited:
- GB-A- 2 292 263
- US-A- 4 310 817
- US-A- 4 591 675
- US-A- 4 798 968

## Description

### Technical Field

The present invention relates to a battery disconnection system for use in the electrical system of a motor vehicle.

### Background of the Invention

Fuse arrangements for disconnecting a vehicle battery from electrical loads in a motor vehicle are well known. In general, such fuse arrangements comprise an electrical conductor having a portion which melts when excessive current passes through the portion of the conductor. Whilst this type of fuse arrangement works well in preventing excessive currents reaching an electrical load, it has limitations in that it only operates when an excessive current passes through the conductor. Also, once a fuse has blown, it is necessary to replace the fuse to reconnect the battery to the electrical loads. US-A-4798968 describes a system in accordance with the preamble of claim 1. GB-A-2292263 describes a system having an inertial release mechanism.

### Summary of the Invention

It is an object of the present invention to provide a battery disconnection system which disconnects a vehicle battery from an electrical load on detection of an adverse condition or on manual actuation.

A battery disconnection system in accordance with the present invention is characterised over US -A-4798968 by the features specified in the characterising portion of claim 1.

The present invention provides protection for electrical loads on detection of a sensed adverse condition, such an excessive high temperature, a vehicle crash, overload current, an anti-theft device, or other sensed adverse condition, any of which may provide the predetermined signal. Further, the predetermined signal may be provided by a manually operable switch.

### Brief Description of the Drawings

The present invention will now be described, by way of example, with reference to the accompanying drawings, in which:-
Figure 1 is a schematic diagram of a first embodiment of battery disconnection system in accordance with the present invention;
Figure 2 is a schematic diagram of a second embodiment of battery disconnection system in accordance with the present invention;
Figure 3 is a schematic diagram of a third embodiment of battery disconnection system in accordance with the present invention;
Figure 4 is a schematic diagram of a fourth embodiment of battery disconnection system in accordance with the present invention in a first position of the female contact;
Figure 5 is a similar view to that of Figure 4 in a second position of the female contact;
Figure 6 is a similar view to that of Figure 4 in a third position of the female contact; and
Figure 7 is a schematic diagram of a fifth embodiment of battery disconnection system in accordance with the present invention.

### Description of the Preferred Embodiment

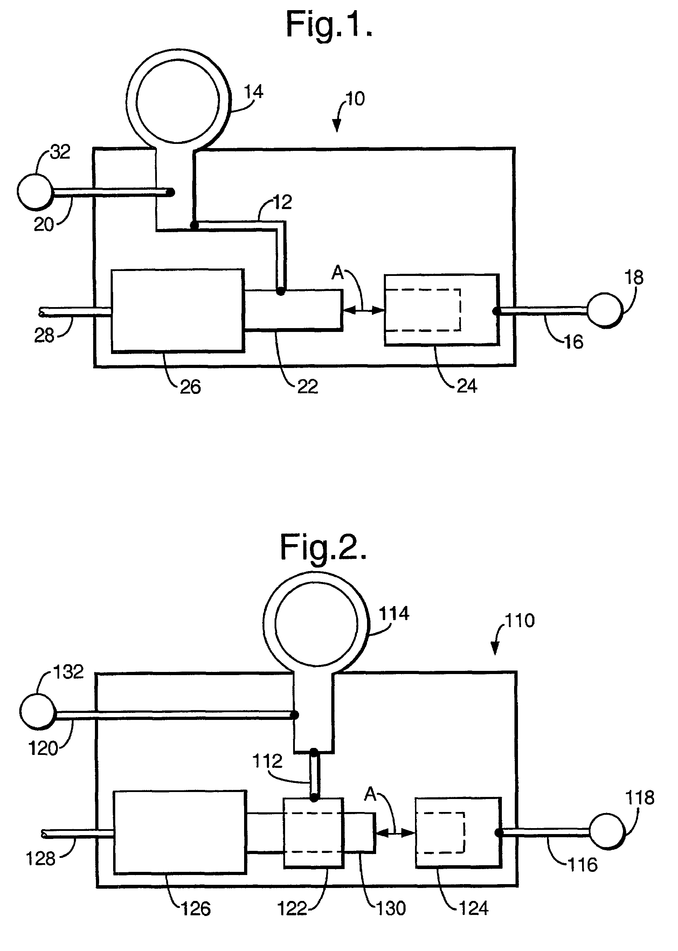

Referring to Figure 1, the battery disconnection system 10 comprises a first electrical conductor 12 which is connected to a battery terminal connector 14, and a second electrical conductor 16 which is connected to one or more electrical loads 18. The battery terminal connector 14 can be connected to a battery terminal (not shown) of a battery of a motor vehicle to directly mount the battery disconnection system 10 directly on the vehicle battery. An additional electrical conductor 20 is connected to the battery terminal connector 14 for supplying power to additional electrical loads 32 which normally need to be permanently connected to the vehicle battery. A first electric contact 22 is attached to the first conductor 12 and a second electric contact 24 is attached to the second conductor 16. In this first embodiment, the first contact 22 is a male contact and the second contact 24 is a corresponding female contact. The battery disconnection system 10 also comprises electric drive means 26. The male contact 22 (which defines electrical connecting means) is secured to the electric drive means 26. The electric drive means 26 can reciprocally move the male contact 22 in the axial direction of arrow A between a first position in which the male contact mates with the female contact 24, and a second position (as shown in Figure 1) in which the male contact is disconnected from the female contact. The electric drive means 26 moves the male contact 22 in accordance with a predetermined signal on a line 28 connected to the electric drive means.

The signal on line 28 can be provided by any one of a number of devices such as a manually operable switch (for disconnecting the battery during transportation, storage, or servicing, of the motor vehicle); or a sensor detecting an adverse condition, such as a vehicle crash, overload current, excessively high temperature, vehicle theft, etc. The electric drive means 26 is preferably biased to place the male contact 22 in the first position, with the male contact being moved to the second position by the electric drive means when the predetermined signal is produced on line 28. The electric drive means 26 is preferably an electromagnetic device, such as a solenoid or a relay.

In the second embodiment of battery disconnection system 110 shown in Figure 2, like parts have been given the same reference as the first embodiment with the prefix 100. In this second embodiment of battery disconnection system 110 (when compared to the first embodiment), the first contact 122 is a female contact, and the electrical connecting means comprises a male contact 130 which is secured to, and movable by, the electric drive means 126. The male contact 130 mates with the first female contact 122 for all positions of the male contact. The male contact 130 also mates with the second female contact 124 in the first position of the male contact, but is disconnected from the second female contact in the second position of the male contact. The male contact 130 therefore provides a connecting bridge between the first and second female contacts 122,124 in the first position of the male contact. Operation of the second embodiment of battery disconnection system 110 is substantially the same as that described above for the first embodiment.

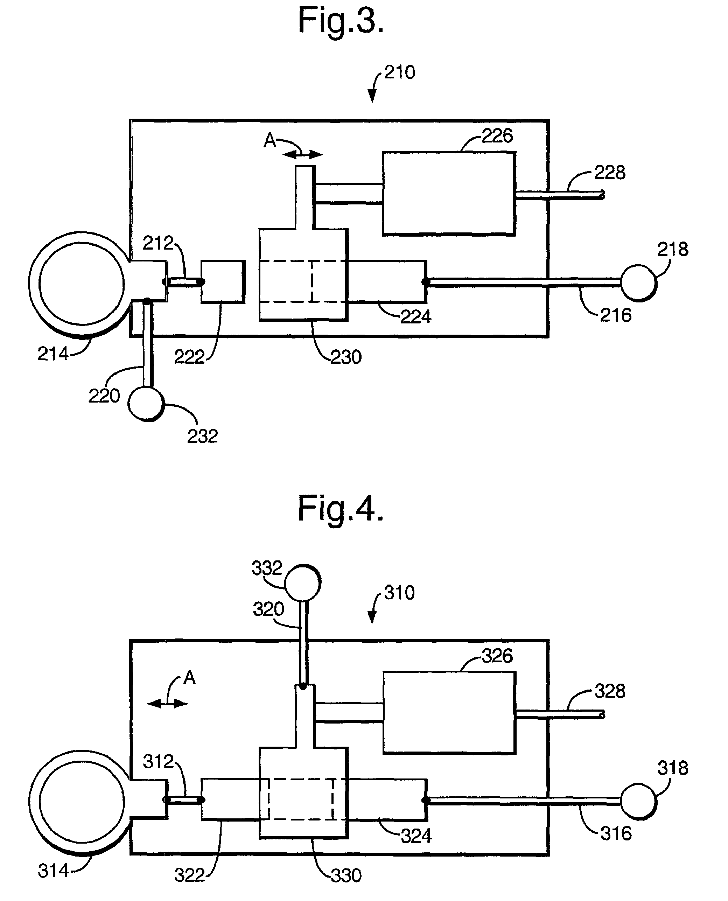

In the third embodiment of battery disconnection system 210 shown in Figure 3, like parts have been given the same reference as the first embodiment with the prefix 200. In this third embodiment of battery disconnection system 210 (when compared to the first embodiment), the second contact 224 is a male contact, and the electrical connecting means comprises a female contact 230 which is secured to, and movable by, the electric drive means 226. The female contact 230 mates with the second male contact 224 for all positions of the female contact. The female contact 230 also mates with the first male contact 222 in the first position of the female contact, but is disconnected from the first male contact in the second position of the female contact. The female contact 230 therefore provides a connecting bridge between the first and second male contacts 222,224 in the first position of the female contact. Operation of the third embodiment of battery disconnection system 210 is substantially the same as that described above for the first embodiment.

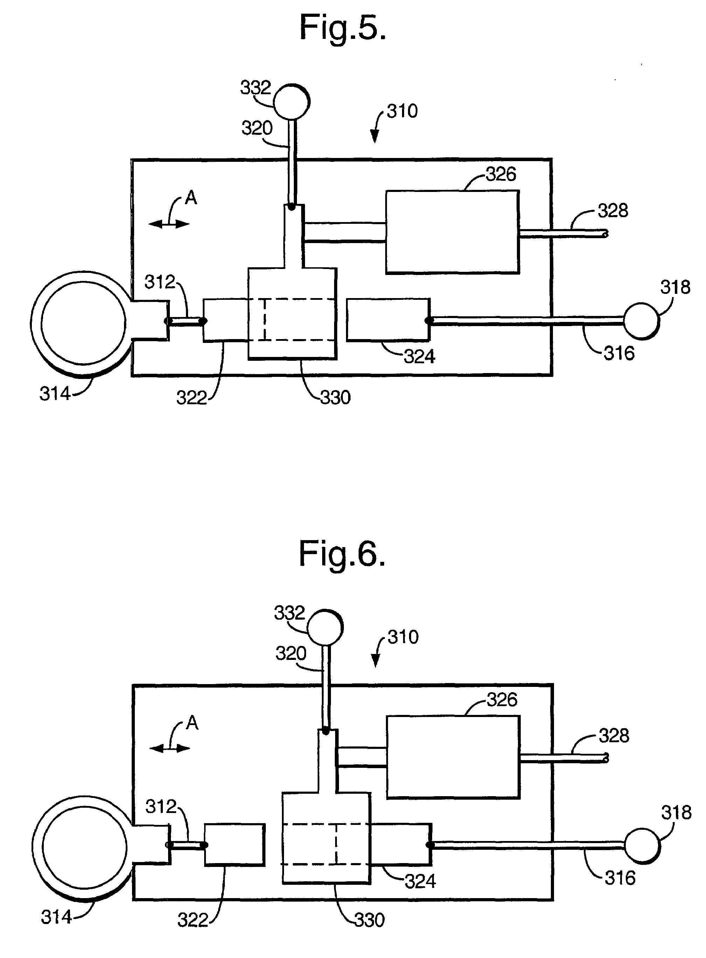

The fourth embodiment of battery disconnection system 310 shown in Figures 4 to 6 is similar to the third embodiment shown in Figure 3 and like parts have been given the same reference numeral with the prefix 300. In this fourth embodiment, the additional electrical conductor 320 is electrically connected to the female contact 330 rather than the battery terminal connector 314. The female contact 330 is secured to, and movable by, the electric drive means 326 from a first position (Figure 4) to a second position (Figure 5), and from the first position to a third position (Figure 6). In the first position, the female contact mates with the first male contact 322 and with the second male contact 324 to provide electrical power to the electrical loads 318 connected to the second conductor 316, and to the additional electrical loads 332 connected to the additional electrical conductor 320 which normally need to be permanently connected to the vehicle battery. If a sensor (not shown) detects an adverse condition or a manual switch (not shown) is operated, the electric drive means 326 receives a signal on line 328 and moves the female contact 330 to the second position shown in Figure 5. In the second position, the electrical loads 318 are disconnected from the vehicle battery, but the electrical loads 332 remain connected to the vehicle battery. If there is a need to totally disconnect all of the electrical loads 318,332 from the vehicle battery (for example, during transportation of the vehicle), a signal can be sent (for example, by manual operation) on line 328 to actuate the electric drive means 326 to move the female contact 330 to the third position shown in Figure 6. Alternatively, the female contact 330 may be moved from the first position to the third position by manual operation.

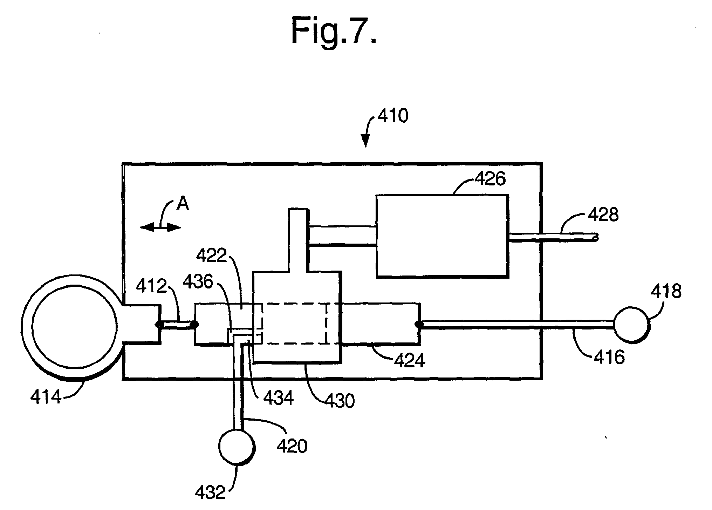

The fifth embodiment of battery disconnection system 410 shown in Figure 7 is similar to the fourth embodiment shown in Figures 4 to 6, and like parts have been given the same reference numeral with the prefix 400. In this fifth embodiment, the additional electrical conductor 420 has a male contact portion 434 which lies alongside the first male contact 422, and which is separated therefrom by a layer 436 of electrically insulating material. The movable female contact 430 can be moved between a first position (as shown in Figure 7) in which the male contacts 422, 424 and 434 are electrically connected together by the female contact; a second position (similar to Figure 5) in which the male contacts 422 and 434 are electrically connected by the female contact 430, but the male contact 424 is electrically disconnected; and a third position (similar to Figure 6) in which the male contacts 424 and 434 are electrically disconnected from the male contact 422. Movement of the female contact 430 by the electric drive means 426 or by manual operation is as described above for the fourth embodiment.

The present invention can be used to disconnect power to the electrical loads on detection of an adverse condition, or on manual operation of a switch.

Although the above described embodiments show examples of the present invention being mounted directly on a terminal of a battery, it will be appreciated that the present invention could be located at any suitable position in the electrical connection between the battery and an electrical load.

## Claims

1. A battery disconnection system (10) comprising a first electrical conductor (12) electrically connectable to a terminal of a battery; a second electrical conductor (16) electrically connectable to an electrical load (18); a first electrical contact (22) attached to the first electrical conductor; a second electrical contact (24) attached to the second electrical conductor; electrical connecting means reciprocally movable between a first position in which the connecting means electrically connects the first and second contacts (22 and 24) and a second position in which the first and second contacts (22 and 24) are disconnected; electric drive means (26) for moving the connecting means from the first position to the second position on receipt of a predetermined signal; **characterised in that** the first electrical contact (22) and the second electrical contact (24) are axially aligned on an axis; and **in that** the electrical connecting means is reciprocally movable in the axial direction of said axis (A).

2. A battery disconnection system as claimed in Claim 1, wherein the electrical connecting means is the first electrical contact (22).

3. A battery disconnection system as claimed in Claim 2, wherein the first contact is a male contact (22) and the second contact is a female contact (24).

4. A battery disconnection system as claimed in Claim 1, wherein the first and second contacts are female contacts (122,124) and the electrical connecting means is a male contact (130) mateable with the female contacts.

5. A battery disconnection system as claimed in Claim 1, wherein the first and second contacts are male contacts (222,224) and the electrical connecting means is a female contact (230) mateable with the male contacts.

6. A battery disconnection system as claimed in any one of Claims 1 to 5, wherein the electric drive means is a solenoid (26).

7. A battery disconnection system as claimed in any one of Claims 1 to 6, wherein the predetermined signal is generated by a crash sensor; and/or by an overload detector; and/or by an anti-theft device; and/or by a manually operated switch.

8. A battery disconnection system as claimed in any one of Claims 1 to 7, further comprising an additional electrical conductor (320) electrically connected to the electrical connecting means (330) and electrically connectable to additional electrical loads; and in which the electrical connecting means is reciprocally movable in the axial direction between the first position and a third position; wherein in the second position the electrical connecting means is electrically connected to the first electrical contact (322), and wherein in the third position the electrical connecting means is electrically disconnected from the first electrical contact.

9. A battery disconnection system as claimed in any one of Claims 1 to 7, further comprising an additional electrical conductor (420) electrically connectable to additional electrical loads, and an additional electrical contact (434) attached to the additional electrical conductor, the additional contact being positioned adjacent the first contact (422) and spaced therefrom by electrically insulating material (436); and in which the electrical connecting means (430) is reciprocally movable in the axial direction between the first position and a third position; wherein in the first position the electrical connecting means is electrically connected to the first, second and additional electrical contacts, in the second position the electrical connecting means is electrically connected to the first and additional electrical contact, and wherein in the third position the electrical connecting means is electrically disconnected from the first electrical contact.

10. A battery disconnection system as claimed in Claim 8 or Claim 9, wherein the electric drive means (426) moves the electrical connecting means from the first position to the third position on receipt of another predetermined signal.

11. A battery disconnection system as claimed in Claim 10, wherein the additional predetermined signal is generated by a manually operated switch.

12. A battery disconnection system as claimed in any one of Claims 1 to 11, further comprising a battery terminal connector (14), the battery terminal connector being connected to the first electrical conductor (12).

## Patentansprüche

1. Batterietrennsystem (10) mit einem ersten elektrischen Leiter (12), der mit einem Anschluss einer Batterie elektrisch verbindbar ist; einem zweiten elektrischen Leiter (16), der mit einer elektrischen Last (18) elektrisch verbindbar ist, einem ersten elektrischen Kontakt (22), der an dem ersten elektrischen Leiter befestigt ist; einem zweiten elektrischen Kontakt (24), der an dem zweiten elektrischen Leiter befestigt ist; einem elektrischen Verbindungsmittel, das zwischen einer ersten Stellung, in der das Verbindungsmittel die ersten und zweiten Kontakte (22 und 24) elektrisch verbindet, und einer zweiten Stellung hin- und herbewegbar ist, in der die ersten und zweiten Kontakte (22 und 24) voneinander getrennt sind; einem elektrischen Antriebsmittel (26) zur Bewegung des Verbindungsmittels von der ersten Stellung zu der zweiten Stellung bei Empfang eines vorbestimmten Signals, **dadurch gekennzeichnet, dass** der erste elektrische Kontakt (22) und der zweite elektrische Kontakt (24) axial auf einer Achse ausgerichtet sind, und dass das elektrische Verbindungsmittel in der axialen Richtung der Achse (A) hin- und herbewegbar ist.

2. Batterietrennsystem nach Anspruch 1, wobei das elektrische Verbindungsmittel der erste elektrische Kontakt (22) ist.

3. Batterietrennsystem nach Anspruch 2, wobei der erste Kontakt ein Steckerkontakt (22) und der zweite Kontakt ein Buchsenkontakt (24) ist.

4. Batterietrennsystem nach Anspruch 1, wobei die ersten und zweiten Kontakte Buchsenkontakte (122, 124) sind und das elektrische Verbindungsmittel ein Steckerkontakt ( 130) ist, der mit den Buchsenkontakten gekoppelt werden kann.

5. Batterietrennsystem nach Anspruch 1, wobei die ersten und zweiten Kontakte Steckerkontakte (222, 224) sind und das elektrische Verbindungsmittel ein Buchsenkontakt (230) ist, der mit den Stecker kontakten gekoppelt werden kann.

6. Batterietrennsystem nach einem der Ansprüche 1 bis 5, wobei das elektrische Antriebsmittel ein Elektromagnet (26) ist.

7. Batterietrennsystem nach einem der Ansprüche 1 bis 6, wobei das vorbestimmte Signal durch einen Aufprallsensor und / oder durch einen Überlastdetektor und / oder durch eine Diebstahlsicherungsvorrichtung und / oder durch einen manuell betätigten Schalter erzeugt wird.

8. Batterietrennsystem nach einem der Ansprüche 1 bis 7, ferner mit einem zusätzlichen elektrischen Leiter (320), der mit dem elektrischen Verbindungsmittel (330) elektrisch verbunden und mit zusätzlichen elektrischen Lasten elektrisch verbindbar ist, und wobei das elektrische Verbindungsmittel in der axialen Richtung zwischen der ersten Stellung und einer dritten Stellung hin- und herbewegbar ist, wobei in der zweiten Stellung das elektrische Verbindungsmittel elektrisch mit dem ersten elektrischen Kontakt (322) verbunden ist, und wobei in der dritten Stellung das elektrische Verbindungsmittel von dem ersten elektrischen Kontakt elektrisch getrennt ist.

9. Batterietrennsystem nach einem der Ansprüche 1 bis 7, ferner mit einem zusätzlichen elektrischen Leiter (420), der mit zusätzlichen elektrischen Lasten elektrisch verbindbar ist, und mit einem zusätzlichen elektrischen Kontakt (434), der an dem zusätzlichen elektrischen Leiter befestigt ist, wobei der zusätzliche Kontakt benachbart des ersten Kontaktes (422) positioniert und von diesem durch ein elektrisch isolierendes Material (436) beabstandet ist, und wobei das elektrische Verbindungsmittel (430) in der axialen Richtung zwischen der ersten Stellung und einer dritten Stellung hin- und herbewegbar ist, wobei in der ersten Stellung das elektrische Verbindungsmittel mit dem ersten, zweiten und zusätzlichen elektrischen Kontakt elektrisch verbunden ist, in der zweiten Stellung das elektrische Verbindungsmittel mit dem ersten und zusätzlichen elektrischen Kontakt verbunden ist, und wobei in der dritten Stellung das elektrische Verbindungsmittel von dem ersten elektrischen Kontakt elektrisch getrennt ist.

10. Batterietrennsystem nach Anspruch 8 oder 9, wobei das elektrische Antriebsmittel (426) das elektrische Verbindungsmittel bei Aufnahme eines anderen vorbestimmten Signals von der ersten Stellung in die dritte Stellung bewegt.

11. Batterietrennsystem nach Anspruch 10, wobei das zusätzliche vorbestimmte Signal durch einen manuell betätigten Schalter erzeugt wird.

12. Batterietrennsystem nach einem der Ansprüche 1 bis 11, ferner mit einem Batterieanschlussverbinder (14), wobei der Batterieanschlussverbinder mit dem ersten elektrischen Leiter (12) verbunden ist.

## Revendications

1. Système de déconnexion de batterie (10) comprenant un premier conducteur électrique (12) pouvant être électriquement connecté à une borne d'une batterie ; un second conducteur électrique (16) pouvant être électriquement connecté à une charge électrique (18) ; un premier contact électrique (22) fixé au premier conducteur électrique ; un second contact électrique (24) fixé au second conducteur électrique ; des moyens de connexion électriques réciproquement mobiles entre une première position dans laquelle les moyens de connexion connectent électriquement les premier et second contacts (22 et 24) et une seconde position dans laquelle les premier et second contacts (22 et 24) sont déconnectés ; des moyens d'entraînement électriques (26) pour déplacer les moyens de connexion de la première position à la seconde position à la réception d'un signal prédéterminé ; **caractérisé en ce que** le premier contact électrique (22) et le second contact électrique (24) sont alignés de manière axiale sur un axe ; et **en ce que** les moyens de connexion électriques sont mobiles dans deux sens opposés dans la direction axiale dudit axe (A).

2. Système de déconnexion de batterie selon la revendication 1, dans lequel les moyens de connexion électriques sont le premier contact électrique (22).

3. Système de déconnexion de batterie selon la revendication 2, dans lequel le premier contact est un contact mâle (22) et le second contact est un contact femelle (24).

4. Système de déconnexion de batterie selon la revendication 1, dans lequel les premier et second contacts sont des contacts femelles (122, 124) et les moyens de connexion électriques sont un contact mâle (130) pouvant s'accoupler avec les contacts femelles.

5. Système de déconnexion de batterie selon la revendication 1, dans lequel les premier et second contacts sont des contacts mâles (222, 224) et les moyens de connexion électriques sont un contact femelle (230) pouvant s'accoupler avec les contacts mâles.

6. Système de déconnexion de batterie selon l'une quelconque des revendications 1 à 5, dans lequel les moyens d'entraînement électriques sont un solénoïde (26).

7. Système de déconnexion de batterie selon l'une quelconque des revendications 1 à 6, dans lequel le signal prédéterminé est généré par un capteur d'accident ; et/ou par un détecteur de surcharge ; et/ou par un dispositif antivol ; et/ou par un commutateur actionné manuellement.

8. Système de déconnexion de batterie selon l'une quelconque des revendications 1 à 7, comprenant en outre un conducteur électrique supplémentaire (320) connecté électriquement aux moyens de connexion électriques (330) et pouvant être connecté électriquement à des charges électriques supplémentaires; et dans lequel les moyens de connexion électriques peuvent se déplacer dans les deux sens dans la direction axiale entre la première position et une troisième position ; dans lequel dans la deuxième position, les moyens de connexion électriques sont électriquement connectés au premier contact électrique (322), et dans lequel dans la troisième position les moyens de connexion électriques sont électriquement déconnectés du premier contact électrique.

9. Système de déconnexion de batterie selon l'une quelconque des revendications 1 à 7, comprenant en outre un conducteur électrique supplémentaire (420) pouvant être connecté électriquement aux charges électriques supplémentaires, et un contact électrique supplémentaire (434) fixé au conducteur électrique supplémentaire, le contact supplémentaire étant positionné à côté du premier contact (422) et espacé de celui-ci par un matériau électriquement isolant (436) ; et dans lequel les moyens de connexion électriques (430) peuvent se déplacer dans les deux sens dans la direction axiale entre la première position et une troisième position ; dans lequel dans la première position, les moyens de connexion électriques sont électriquement connectés aux premier et deuxième contacts électriques et au contact électrique supplémentaire, dans la deuxième position les moyens de connexion électriques sont électriquement connectés au premier contact électrique et au contact électrique supplémentaire, et dans lequel dans la troisième position les moyens de connexion électriques sont électriquement déconnectés du premier contact électrique.

10. Système de déconnexion de batterie selon la revendication 8 ou la revendication 9, dans lequel les moyens d'entraînement électriques (426) déplacent les moyens de connexion électriques de la première position à la troisième position à la réception d'un autre signal prédéterminé.

11. Système de déconnexion de batterie selon la revendication 10, dans lequel le signal prédéterminé supplémentaire est généré par un commutateur actionné manuellement.

12. Système de déconnexion de batterie selon l'une quelconque des revendications 1 à 11, comprenant en outre un connecteur de borne de batterie (14), le connecteur de borne de batterie étant connecté au premier conducteur électrique (12).
